(19) Europäisches Patentamt
European Patent Office
Office européen des brevets

(11) EP 3 950 300 A1

(12) # EUROPEAN PATENT APPLICATION
published in accordance with Art. 153(4) EPC

(43) Date of publication:
**09.02.2022 Bulletin 2022/06**

(21) Application number: **20778785.4**

(22) Date of filing: **13.03.2020**

(51) International Patent Classification (IPC):
***B32B 5/22*** *(2006.01)* ***B32B 27/32*** *(2006.01)*
***H01M 2/16*** *(2006.01)*

(52) Cooperative Patent Classification (CPC):
**B32B 5/22; B32B 27/32; H01M 50/409;** Y02E 60/10

(86) International application number:
**PCT/JP2020/011079**

(87) International publication number:
**WO 2020/195948 (01.10.2020 Gazette 2020/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.03.2019 JP 2019063196**
**28.03.2019 JP 2019063198**

(71) Applicant: **Toray Industries, Inc.**
**Tokyo, 103-8666 (JP)**

(72) Inventors:
- **IKOMA, Kei**
**Otsu-shi, Shiga 520-8558 (JP)**
- **KAI, Nobuyasu**
**Otsu-shi, Shiga 520-8558 (JP)**
- **TSUKUDA, Akimitsu**
**Otsu-shi, Shiga 520-8558 (JP)**

(74) Representative: **Mewburn Ellis LLP**
**Aurora Building**
**Counterslip**
**Bristol BS1 6BX (GB)**

(54) **POROUS FILM, SEPARATOR FOR SECONDARY BATTERIES, AND SECONDARY BATTERY**

(57) [Problem] An object of the present invention is to provide, at low cost, a secondary battery separator that expresses the characteristics of the porous layer sufficiently owing to the excellent adhesiveness between the porous base material and the porous layer, and has excellent battery characteristics.

[Solution] A porous film including: a polyolefin-made porous base material; and a porous layer laminated on at least one face of the polyolefin-made porous base material and containing a heat-resistant resin having a melting point of 200°C or more or having no melting point, wherein the porous layer has a porosity of 50% or more and 80% or less and a strength of 0.4 N/10 mm or more, and wherein the strength of the porous layer is lower than the adhesive strength between the polyolefin-made porous base material and the porous layer in the longitudinal direction in a 180-degree peel test.

EP 3 950 300 A1

## Description

TECHNICAL FIELD

The present invention relates to a porous film, a secondary battery separator, and a secondary battery.

BACKGROUND ART

Secondary batteries such as lithium-ion batteries are widely used for: portable digital devices such as smartphones, tablet computers, mobile phones, notebook computers, digital cameras, digital video cameras, and handheld game consoles; portable devices such as electric tools, electric motorcycles, and electrically assisted bicycles; automobiles such as electric vehicles, hybrid electric vehicles, and plug-in hybrid electric vehicles; and the like.

In general, a lithium-ion battery has a structure in which a secondary battery separator and an electrolyte are interposed between a cathode composed of a cathode active material laminated on a cathode current-collector and an anode composed of an anode active material laminated on an anode current-collector.

For a secondary battery separator, a polyolefin porous base material is used. Examples of characteristics demanded by secondary battery separators include the following: characteristics by which a porous structure containing an electrolyte solution enables ion migration; and shutdown characteristics by which a lithium-ion battery, if overheated, generates heat, the melting due to which shuts down the porous structure, shuts down the ion migration, and thus shuts down electricity generation.

There is a demand for a secondary battery separator having not only the above-mentioned characteristics but also dimensional stability and thermal film-breakage resistance at high temperature. When a lithium-ion battery is overheated, the above-mentioned shutdown characteristics work, and then, the battery further heated causes the secondary battery separator to shrink, thus generating a short-circuit site in some cases. In addition, a lithium-ion battery undergoing an impact generates heat locally under pressure, thus breaking the film of the secondary battery separator in some cases. Such breakage of the film of the secondary battery separator poses a possibility that a short circuit is caused inside the battery.

Thus, a secondary battery separator demands not only shutdown characteristics but also thermal film-breakage resistance at high temperature. Furthermore, there is a demand for allowing a lithium-ion battery to have better battery characteristics such as higher output, longer life, and higher capacity, and in addition, there is a demand for supplying a lithium-ion battery at low cost.

In response to these demands, Patent Literature 1 discloses a battery separator which includes: a porous film mainly composed of a polyolefin; and a porous film containing a binder and a plate-like inorganic filler, and thus, which makes it possible to decrease the thermal shrinkage ratio.

In addition, Patent Literature 2 discloses a laminate porous film having shape stability at high temperature, wherein the film is obtained by laminating a heat-resistant layer containing a resin binder and a filler on a porous base material containing a polyolefin as a main component.

Patent Literature 3 discloses a lithium battery separator which has excellent shutdown characteristics, constituted by a three-layer-structure microporous film characterized in that both of the surface layers are each a microporous layer which has a melting point of 145°C or less and is composed of a copolymer containing vinylidene fluoride, and that the interlayer is a microporous layer which has a melting point of 140°C or less and is composed of a polyolefin.

In addition, Patent Literature 4 discloses a secondary battery separator in which a heat-resistant porous layer composed of a heat-resistant polymer and an inorganic filler is laminated on a microporous film for the purpose of enhancing the shutdown characteristics and heat resistance.

Citation List

Patent Literature

Patent Literature 1: JP2010-123465A
Patent Literature 2: JP2016-130027A
Patent Literature 3: JP2002-216734A
Patent Literature 4: JP2009-231281A

## SUMMARY OF INVENTION

### Technical Problem

From the viewpoint of battery safety, a battery separator demands not only shutdown characteristic but also electrolyte-solution wettability for the purposes of thermal film-breakage resistance, good ion migration, and productivity enhancement.

Although Patent Literature 1 provides good electrolyte-solution wettability in the thickness direction, however, the heat resistance of the binder used for the porous layer does not make it possible to obtain sufficient dimensional stability and thermal film-breakage resistance at high temperature because the thermal shrinkage ratio is increased when the separator reaches a high temperature region after shutdown. In addition, Patent Literature 2 involves lamination of a heat-resistant nitrogen-containing aromatic polymer, and thus, allows the thermal shrinkage ratio to decrease when the separator reaches a high temperature region after shutdown, but the characteristics of the resin binder causes the sufficient thermal film-breakage resistance and wettability with electrolyte solution to be insufficient, thus not making it possible to afford sufficient battery characteristics.

Patent Literature 3 proposes including a porous layer having a melting point of 145°C or less, but such a porous layer increases the thermal shrinkage ratio when the separator reaches a high temperature region after shutdown, thus failing to secure sufficient dimensional stability and thermal film-breakage resistance at high temperature.

Patent Literature 4 involves use of a heat-resistant resin having a relatively low molecular weight, and thus, decreases the strength of the heat-resistant porous layer and the adhesiveness between the heat-resistant porous layer and the microporous film, thus causing powdery detachment of inorganic particles in a step of providing the heat-resistant porous layer and/or a battery production step, not enabling the separator to acquire thermal film-breakage resistance, and not making it possible to sufficiently utilize the shutdown characteristics of the porous material.

In view of the above-mentioned problems, an object of the present invention is accordingly to provide, at low cost, a porous film that has excellent battery characteristics and excellent electrolyte-solution wettability even if provided with low-temperature shutdown characteristics and high-temperature dimensional stability and thermal film-breakage resistance. Another object is to provide a secondary battery that has good low-temperature shutdown characteristics and good high-temperature dimensional stability and thermal film-breakage resistance, and that achieves high capacity, high output, long life, and low cost.

### Solution to Problem

In view of the above-mentioned, the present inventors have vigorously made studies so that a secondary battery separator can be provided with low-temperature shutdown characteristics, exhibit a large temperature difference between the shutdown temperature and the separator-melting temperature, and be provided with high-temperature dimensional stability and thermal film-breakage resistance, and so that a porous film having excellent battery characteristics can be provided at low cost. In addition, the present invention has been reached through the discovery that adjusting, within a given range, both the permeation speed of the electrolyte solution as an index for the permeability of the electrolyte solution and the per-hour immersion area of the electrolyte solution contributes to enhancement of the cycle characteristics and rate characteristics of the battery.

To solve the above-mentioned problems, a porous film according to the present invention has the following constituents.

(1) A porous film including:

a polyolefin-made porous base material, and
a porous layer laminated on at least one face of the polyolefin-made porous base material and containing a heat-resistant resin having a melting point of 200°C or more or having no melting point,
wherein the porous layer has a porosity of 50% or more and 80% or less and a strength of 0.4 N/10 mm or more, and
wherein the strength of the porous layer is lower than the adhesive strength between the polyolefin-made porous base material and the porous layer in the longitudinal direction in a 180-degree peel test.

(2) The porous film, wherein the permeation speed of diethyl carbonate through the porous film is 4 μm/min or more, and the permeation area of the diethyl carbonate is 500 $mm^2$ or more after the permeation allowed for 10 seconds.

The permeation speed is calculated from the following: a period of time from the time when 100 μL of diethyl carbonate is dropped onto the front face of the porous film to the time when the diethyl carbonate reaches the back face;

and the thickness of the porous film.

The permeation area of the diethyl carbonate is calculated, using an image analysis software, from an image taken after the 100 μL of the diethyl carbonate is dropped and left to stand for 10 seconds.

(3) The porous film according to (1) or (2), wherein the porous layer contains inorganic particles.
(4) The porous film according to any one of (1) to (3), wherein the falling-ball film-breakage temperature of the porous film is 250°C or more.
(5) The porous film according to any one of (1) to (4), wherein the shutdown temperature of the porous film is 135°C or less.
(6) The porous film according to any one of (1) to (5), wherein a difference between the shutdown temperature and meltdown temperature of the porous film is 70°C or more.
(7) A secondary battery separator, including the porous film according to any one of (1) to (6).
(8) A secondary battery including the secondary battery separator according to (7).

Advantageous Effects of Invention

The present invention makes it possible to provide, at low cost, a porous film that has excellent electrolyte-solution wettability and excellent battery characteristics even if provided with low-temperature shutdown characteristics and high-temperature dimensional stability and thermal film-breakage resistance. In addition, using a secondary battery separator according to the present invention makes it possible to provide a secondary battery that has good low-temperature shutdown characteristics and good high-temperature dimensional stability and thermal film-breakage resistance, and that achieves high capacity, high output, long life, and low cost.

DESCRIPTION OF EMBODIMENTS

A porous film according to the present invention includes a porous base material and a porous layer containing a heat-resistant resin and laminated on at least one face of the porous base material.

Below, the present invention will be described in detail.

[Porous Layer]

(Heat-resistant Resin)

The porous layer provides the following: characteristics by which a temperature difference is large between the shutdown temperature and the temperature at which the separator is melted down; and high-temperature dimensional stability and thermal film-breakage resistance. From this viewpoint, the porous layer contains a heat-resistant resin (A) having a melting point of 200°C or more or a heat-resistant resin (B) having no melting point.

The heat-resistant resin having a melting point of 200°C or more refers to a resin which exhibits an endothermic peak of 200°C or more, as measured using a differential scanning calorimeter (DSC) in accordance with JIS K7121 (2012), when heated first, cooled, and then heated for the second time.

The heat-resistant resin having no melting point refers to a resin which has no endothermic peak in the temperature range of from -20 to 230°C, as measured using a DSC in accordance with JIS K7121 (2012), when heated first, cooled, and then heated for the second time. Without using a heat-resistant resin having the characteristics of (A) or (B), the separator with high-temperature dimensional stability or thermal film-breakage resistance cannot be provided.

Examples of such heat-resistant resins as above-mentioned include polyethylene terephthalate, polysulfones, polyether sulfones, polyphenylenesulfides, polyacrylates, polyetherimides, polyether ether ketones, polyamides, polyimides, polyamideimides, fluorine resins, cellulose, derivatives thereof, and the like. A plurality of these resins may be used.

Among these, more preferable resins are aromatic polyamides, aromatic polyimides, and aromatic polyamideimides, and most preferable ones are aromatic polyamides.

Examples of aromatic polyamides include meta-oriented aromatic polyamides and para-oriented aromatic polyamides. Either may be used, but para-oriented aromatic polyamides are preferable from the viewpoint of affording excellent battery characteristics and thermal shrinkage ratio in cases where the porous film is used for a secondary battery separator.

An aromatic polyamide that can be used suitably has a repeating unit represented by the following Chem. (1) and/or Chem. (2).

Chem. (1):

[Chem. 1]

$$-\!\left(NH-Ar_1-NHCO-Ar_2-CO\right)\!- \quad (1)$$

Chem. (2):

[Chem. 2]

$$-\!\left(NH-Ar_3-CO\right)\!- \quad (2)$$

In the present invention, regulating the hydrophilicity of the heat-resistant resin makes it possible to adjust the deposition speed of the heat-resistant resin in the below-mentioned phase separation step. Allowing the resin to be deposited fast and allowing the fibril of the resin to grow uniformly makes it possible to enhance the adhesiveness between the porous base material and the porous layer, enhance the heat resistance and strength of the porous layer, and inhibit detachment of the inorganic particles during battery fabrication and during coating. Regulating the copolymerization ratios or inherent viscosity of the heat-resistant resin makes it possible to adjust the hydrophilicity of the heat-resistant resin. From such a viewpoint, a copolymer composed of basic units represented by Chem. (1) and Chem. (2) is preferable.

For the copolymerization ratios of the copolymer, it is preferable that the ratio of the basic unit represented by Chem. (1) is 80% or more. From the viewpoint of enhancing the adhesiveness between the porous base material and the porous layer and sufficiently expressing the below-mentioned shutdown properties of the porous film, the ratio is more preferably 85% or more, still more preferably 90% or more. In addition, the upper limit of the copolymerization ratio of a basic unit represented by Chem. (1) is preferably 99% or less.

Here, examples of $Ar_1$, $Ar_2$, and $Ar_3$ include a group selected from the groups represented by the following Chems. (3) to (7), and the like.

Chems. (3) to (7):

[Chem. 3]

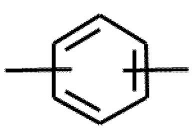 (3), 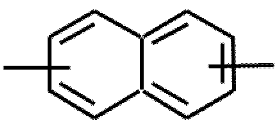 (4), 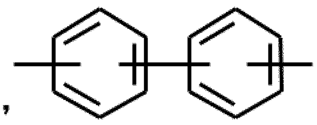 (5),

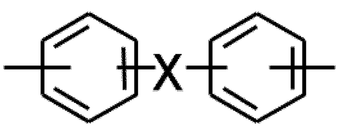 (6), 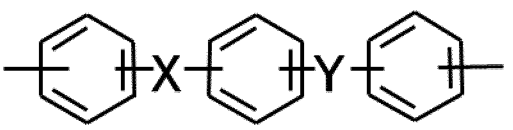 (7)

In addition, X and Y are selected from, but are not limited to, -O-, -CO-, $-CO_2-$, $-SO_2-$, $-CH_2-$, -S-, $-C(CH_3)_2-$, and the like.

Furthermore, part of the hydrogen atoms on an aromatic ring in these $Ar_1$ to $Ar_3$ may be substituted with a substituent such as fluorine, bromine, a halogen group such as chlorine, nitro group, cyano group, alkyl group, alkoxy group, or the like. In particular, having an electron-withdrawing substituent such as a halogen group, nitro group, or cyano group leads to having excellent electrochemical oxidation resistance, prevents deterioration such as oxidation on the cathode side of the film used as a separator, and thus, is preferable. Among these, a halogen group is more preferable as a substituent, and a chlorine atom is most preferable.

In addition, the bonding hands in $Ar_1$ to $Ar_3$ may have ortho-orientation, meta-orientation, or para-orientation, and aromatic rings having para-orientation preferably account for 50 mol% or more of all the aromatic rings. The ratio is more preferably 100 mol%. As used herein, para-orientation refers to the state where the divalent bonding hands constituting the main chain of an aromatic ring are coaxial or parallel with each other.

In addition, the lower limit of the inherent viscosity (ηinh) of the heat-resistant resin is preferably 4.0 dl/g or more from the viewpoint of enhancing the adhesiveness between the porous base material and the porous layer, the heat resistance, and the strength of the porous layer and inhibiting detachment of inorganic particles during battery fabrication and during coating. The lower limit is more preferably 4.5 dl/g or more from the viewpoint of enhancing the heat resistance and adhesiveness between the porous base material and the porous layer and sufficiently expressing the below-mentioned shutdown characteristics of the porous film. The upper limit of the inherent viscosity is preferably 7.0 dl/g or less from the viewpoint of the dispersion of inorganic particles in a coating liquid and from the viewpoint of productivity. The inherent viscosity of the resin serves as an index of molecular weight.

Using a heat-resistant resin having the above-mentioned copolymerization ratios and/or inherent viscosity adjusted suitably in the porous layer makes it possible to provide the porous layer with high strength even though the porosity of the porous layer is 50% or more and 80% or less.

Furthermore, in cases where it is desired to provide the porous layer with low-temperature shutdown characteristics, the porous layer preferably contains an organic resin other than the heat-resistant resin. As used herein, low-temperature shutdown characteristics refer to characteristics by which the below-mentioned shutdown temperature is 135°C or less. Such a temperature is more preferably 130°C or less from the viewpoint of a further decrease in the exothermic onset temperature with a secondary battery having higher capacity and higher output.

The organic resin is preferably, for example, an organic resin having a melting point of 135°C or less. The organic resin is not limited to any particular organic resin provided that such an organic resin has a melting point of 135°C or less. Such an organic resin used for a lithium-ion battery, which is a non-aqueous electrolyte-solution secondary battery, markedly dislikes water being brought into the system, and thus, a polyolefin resin, acryl resin, fluorine resin, polyvinylidene fluoride, or the like can be used suitably. In particular, it is more preferable to use particles composed of high-density polyethylene, low-molecular-weight polyethylene, or the like.

(Inorganic Particles)

To provide the porous layer with foreign-matter resistance, it is preferable that the porous layer contains inorganic particles. The foreign-matter resistance refers to resistance to an active material detached from the cathode or the anode and to foreign matter leaking in during a battery production step.

Examples of inorganic particles include: inorganic oxide particles such as aluminium oxide, boehmite, silica, titanium oxide, zirconium oxide, iron oxide, and magnesium oxide; inorganic nitride particles such as aluminium nitride and silicon nitride; insoluble ionic-crystal particles such as calcium fluoride, barium fluoride, and barium sulfate; and the like. Among these, one kind of particles may be used, or two or more kinds thereof in mixture may be used.

The amount of inorganic particles contained in the porous layer is preferably 80 mass% or more and less than 97 mass% with respect to 100 mass% of the whole porous layer from the viewpoint of the porosity and battery characteristics of the porous layer, and is more preferably 85 mass% or more and less than 95 mass% from the viewpoint of achieving both thermal shrinkage and battery characteristics. In cases where the amount of inorganic particles is brought into the preferable range, the amount can be adjusted in the above-mentioned range of copolymerization ratio and inherent viscosity of the heat-resistant resin to enhance the strength of the porous layer and prevent the inorganic particles from being detached from the porous layer.

The primary average particle diameter of inorganic particles to be used is preferably 0.10 μm or more and 5.0 μm or less, more preferably 0.10 μm or more and 2.5 μm or less, from the viewpoint of the strength and porosity of the porous layer. Allowing the lower limit of the primary average particle diameter to be 0.10 μm or more makes the porous layer denser, and closing the pores of the porous base material increases the air permeability, thus making it possible to prevent the battery characteristics from being degraded. In addition, allowing the upper limit to be 5.0 μm or less prevents the porous layer from having an ununiform structure and thus failing to obtain a sufficient thermal shrinkage ratio, and in addition, prevents the film thickness of the porous layer from increasing and thus decreasing the battery characteristics.

In addition, to achieve both the porosity and strength of the porous layer, the porous layer preferably contains two or more different kinds of particles having different average particle diameters, more preferably contains inorganic particles having an average particle diameter of 0.30 μm or more and 2.5 μm or less and inorganic particles having an average particle diameter of 0.10 μm or more and less than 0.30 μm.

Examples of the shapes of particles to be used include spherical, plate-like, needle-like, rod-like, elliptic, and like shapes, and the shape may be any one of these. Among these, a spherical shape is preferable from the viewpoints of surface modification characteristics, dispersion, and coating properties.

(Production of Porous Layer)

In the present invention, the porous layer refers to a layer having pores therein. Here, the porous layer is not

limited to any particular composition or forming method. A porous layer containing an aromatic polyamide resin as a heat-resistant resin will be below described as one example.

The coating liquid is not limited to any particular preparation order. From the viewpoint of uniform dispersion of inorganic particles and the uniformity of the particle diameter of inorganic particles in the coating liquid, it is preferable that a solution obtained by mixing and dissolving an aromatic polyamide resin in an aprotic organic polar solvent is mixed with a dispersion liquid obtained by dispersing inorganic particles in an aprotic organic polar solvent, and that, if necessary, another organic resin, additive, and/or the like is/are further added to the resulting mixture to prepare a coating liquid.

For example, the coating liquid is prepared from the following: a solution containing an aromatic polyamide resin produced using a diamine and an acid dichloride as raw materials by a known production method such as solution polymerization; and a dispersion liquid having inorganic particles dispersed.

Here, examples of solvents that can be used to disperse inorganic particles therein include aprotic organic polar solvents such as N-methyl-2-pyrrolidone, N,N-dimethylacetoamide, dimethylformamide, and dimethylsulfoxide. Among these, N-methyl-2-pyrrolidone is particularly preferable from the viewpoint of forming a porous structure in a subsequent step.

In addition, a poor solvent of an aromatic polyamide resin may be added as an additive to promote the porousness. Among these, water is preferably added, and the amount of water to be added is preferably 500 parts by mass or less with respect to 100 parts by mass of aromatic polyamide resin. With water added in an amount of more than 500 parts by mass, the aromatic polyamide resin is, for example, coagulated in the coating liquid in some cases, thus failing to afford sufficient stability to the coating liquid.

To the coating liquid, an organic resin, dispersant, thickener, stabilizer, defoamer, leveling agent, and/or the like may be added, if necessary, besides the aromatic polyamide resin and the inorganic particles.

The coating liquid is not limited to any particular dispersion method. From the viewpoint of heat resistance and electrolyte-solution wettability, it is important that the particles are dispersed uniformly, and that the particle diameter of the inorganic particles in the coating liquid is uniform. It is preferable that dispersing particles in a solvent using a mill such as a ball mill, bead mill, sand mill, or roll mill is followed by using a mill such as a ball mill, bead mill, sand mill, or roll mill to disperse an organic resin in the solvent having particles dispersed.

In particular, for dispersion with a heat-resistant resin added, it is preferable that a bead mill is used for the dispersion, from the viewpoint of the uniformity of the particle diameter of the inorganic particles in the coating liquid, and it is preferable that the diameter of the beads to be used for a bead mill is 0.1 to 1 mm, and that the material of the beads to be used is aluminium oxide, zirconium oxide, zirconia toughened alumina, or the like.

In addition, the dispersion with a heat-resistant resin added is preferably performed a plurality of times, and furthermore, it is preferable that the peripheral speed is greater than a speed at which the inorganic particles are dispersed in a solvent, and is increased stepwise, from the viewpoint of the uniformity of the particle diameter of the inorganic particles in the coating liquid.

The viscosity of the coating liquid is preferably 1,000 to 2,000 mPa·s, more preferably 1,000 to 1,800 mPa·s, from the viewpoint of heat resistance. The viscosity of the coating liquid can be controlled on the basis of the solid content of the coating liquid, the mixing ratio between the organic resin and the inorganic particle, and the molecular weight of the organic resin.

Next, the resulting coating liquid is applied onto a porous base material, passed through an air gap, immersed in a water bath, dried, and laminated with a porous layer. During the passage through the air gap, the atmosphere is preferably under conditions where the temperature is 40 to 80°C and where the humidity is 60 to 80 RH% or more, from the viewpoint of making uniform micropores having no coarse pore in the surface structure of the porous layer in order to enhance the electrolyte-solution wettability and enhance the heat resistance.

The coating method needs only to be a known coating method. Examples of such methods that can be utilized include dip coating, gravure coating, slit die coating, knife coating, comma coating, kiss coating, roll coating, bar coating, spray coating, immersion coating, spin coating, screen printing, ink-jet printing, pad printing, other kinds of printing, and the like. The coating method is not limited to these, and needs only to be selected in accordance with preferable conditions such as a heat-resistant resin, aprotic organic polar solvent, inorganic particle, organic resin, and dispersant that are to be used, and a leveling agent, solvent, and base material that are to be used. Additionally, to enhance the coating properties, the coating face of the porous base material may undergo, for example, surface treatment such as corona treatment or plasma treatment.

(Characteristics of Porous Layer)

The porous layer has a porosity of 50% or more and 80% or less. The porosity is preferably 55% or more and 80% or less, more preferably 55% or more and 75% or less. The porous layer having a porosity of 50% or more makes it possible to prevent the battery characteristics from being degraded. The porous layer having a porosity of 80% or less makes it possible to sufficiently express, for example, heat resistance. In some cases, the porous layer having a porosity

of less than 50% leads to decreasing the ion permeability and degrading the battery characteristics. In some cases, the porosity of more than 80% leads to decreasing the heat resistance and/or causing powdery detachment of the inorganic particles. The porosity of the porous layer can be adjusted by regulating the amount of the inorganic particles in the porous layer, the average particle diameter, and the like. In addition, the porosity of the porous layer can be calculated by binarizing the cross-sectional image and using the intimacy, thickness, and basis weight of the porous layer. Specifically, the porosity can be determined by the measurement method described in the Examples section.

The total film thickness of the porous layer is preferably 1 μm or more and 6 μm or less. The total film thickness is more preferably 1.5 μm or more and 5 μm or less. The total film thickness is still more preferably 2 μm or more and 4 μm or less. Here, the "total film thickness of the porous layer" refers to the film thickness of a porous layer in cases where the porous layer is on one face of a porous base material, and refers to the total film thickness of both porous layers in cases where the porous layers are on the respective both faces of the porous base material. The porous layer having a total film thickness of 1 μm or more makes it possible to obtain sufficient thermal film-breakage resistance. In addition, 6 μm or less makes it possible to obtain a sufficiently porous structure and prevent the battery characteristics from decreasing. In addition, such a film thickness is advantageous from the viewpoint of cost.

[Polyolefin-made Porous Base Material]

In the present invention, examples of polyolefin-made porous base materials include the following: porous films containing a polyolefin and having pores in the film; non-woven fabrics; porous film sheets composed of a fibrous material; and the like. Using polyolefin makes it possible to provide a shutdown function. Here, the shutdown function refers to a function such that, if a lithium-ion battery is overheated, generates heat, the melting due to which shuts down the porous structure, shuts down the ion migration, and thus shuts down the electricity generation.

The polyolefin-made porous base material is more preferably a porous base material containing a polyolefin having a melting point of 200°C or less. Specific examples of polyolefins include polyethylene, polypropylene, copolymers thereof, mixtures obtained by combining these, and the like. Examples of such base materials include monolayer porous base materials containing 90 mass% or more of polyethylene, multilayer porous base materials composed of polyethylene and polypropylene, and the like.

Examples of methods of producing a polyolefin-made porous base material include the following: a method in which a polyolefin-based resin is formed into a sheet, which is stretched so as to become porous; and a method in which a polyolefin-based resin is dissolved in a solvent such as a liquid paraffin, and formed into a sheet, from which the solvent is extracted so that the sheet can become porous.

The polyolefin-made porous base material obtained by the above-mentioned method may be surface-treated from the viewpoint of adhesiveness with the porous layer. Among others, performing corona treatment in an atmosphere of air, nitrogen, or carbon dioxide gas is preferable from the viewpoint of increasing the adhesive strength of the porous layer. However, performing corona treatment at a high treatment intensity makes holes in the polyolefin-made porous base material in some cases.

The largest surface height difference of the polyolefin-made porous base material obtained by the above-mentioned method is preferably 150 nm or more from the viewpoint of adhesiveness with the porous layer. The largest surface height difference can be measured using an atomic force microscope. In the measurement, the measurement area is in the range of 4 × 4 μm. The largest surface height difference of the porous base material can be controlled by changing the stretch conditions for the porous base material, specifically the stretch ratio and the stretch temperature.

The thickness of the polyolefin-made porous base material is preferably 3 μm or more and 50 μm or less, more preferably 5 μm or more and 30 μm or less. The polyolefin-made porous base material having a thickness of 50 μm or less makes it possible to inhibit the internal resistance of the polyolefin-made porous base material. In addition, the polyolefin-made porous base material having a thickness of 3 μm or more makes it possible to obtain mechanical properties needed for conveyance and coating.

The polyolefin-made porous base material preferably has an air permeability of 50 seconds/100 cc or more and 1,000 seconds/100 cc or less. The air permeability is more preferably 50 seconds/100 cc or more and 500 seconds/100 cc or less. The air permeability of 1,000 seconds/100 cc or less makes it possible to obtain sufficient ion migration and exert sufficient characteristics in the battery. In addition, 50 seconds/100 cc or more makes it possible to obtain mechanical properties needed for conveyance and coating.

[Porous Film]

A porous layer in a porous film according to the present invention has a strength of 0.4 N/10 mm or more, and the strength of the porous layer is lower than the adhesive strength between the polyolefin-made porous base material and the porous layer in the longitudinal direction in a 180-degree peel test.

With the porous layer having a strength of less than 0.4 N/10 mm, the porous layer has a low strength, and the

function of the porous layer cannot be expressed sufficiently, thus causing the inorganic particles to be detached from the porous layer during battery fabrication and coating, and contaminating the processes, in some cases. The strength of the porous layer is not limited to any particular upper limit, and is preferably 5 N/10 mm or less.

In some of the cases where the strength of the porous layer is higher than the adhesive strength between the polyolefin-made porous base material and the porous layer in the longitudinal direction in a 180-degree peel test, the adhesion between the polyolefin-made porous base material and the porous layer is lower, thus not making it possible to express the functions of the porous base material and the porous layer sufficiently.

The balance between the strength of the porous layer and the adhesive strength between the polyolefin-made porous base material and the porous layer in the longitudinal direction in a 180-degree peel test can be adjusted by regulating the copolymerization ratio and/or inherent viscosity of the heat-resistant resin.

In addition, the strength of the porous layer and the adhesive strength between the polyolefin-made porous base material and the porous layer in the longitudinal direction in a 180-degree peel test can be determined by tape-peeling measurement. The tape-peeling measurement can be performed on a porous film in the longitudinal direction in a 180-degree peel test in accordance with the method 1 described in 10.3 Test Method in JIS Z0237 (2009). Specifically, the strength can be determined by the measurement method described in the Examples.

The permeation speed of diethyl carbonate through a porous film according to the present invention is preferably 4 μm/min or more. The diethyl carbonate permeation speed is not limited to any particular upper limit, and is preferably 200 μm/min or less. The diethyl carbonate permeation speed serves as an index of the electrolyte-solution wettability in the thickness direction. In some cases, the diethyl carbonate permeation speed of less than 4 μm/min leads to causing the electrolyte-solution wettability to be insufficient, lengthening the solution-filling time for the electrolyte solution in the battery fabrication step, degrading the processability, and/or causing the impregnation with the electrolyte solution in the thickness direction to be ununiform.

The permeation speed of diethyl carbonate through the porous film can be calculated from the following: a period of time from the time when 100 μL of diethyl carbonate is dropped onto the front face of the porous film to the time when the diethyl carbonate reaches the back face; and the thickness of the porous film.

The area over which diethyl carbonate permeates in the porous film in 10 seconds is preferably 500 $mm^2$ or more. The after-10-second diethyl carbonate permeation area serves as an index of the electrolyte-solution wettability in the planar direction. In some cases, the after-10-second diethyl carbonate permeation area of less than 500 $mm^2$ leads to causing the electrolyte-solution wettability to be insufficient, causing the impregnation with the electrolyte solution in the planar direction to be ununiform, and degrading the battery characteristics.

The after-10-second diethyl carbonate permeation area of the porous film is calculated, using an image analysis software, from an image of the front face of the porous film, wherein the image is taken after 100 μL of diethyl carbonate is dropped onto the front face and left to stand for 10 seconds.

The diethyl carbonate permeation speed and after-10-second diethyl carbonate permeation area of the porous film can be adjusted by regulating the copolymerization ratio and/or inherent viscosity of the heat-resistant resin and the amount of the inorganic particles in the porous layer.

The porous film preferably has a falling-ball film-breakage temperature of 250°C or more. The falling-ball film-breakage temperature means a temperature at which a short circuit is caused when a given load is applied. The temperature serves as an index for evaluation of heat resistance. By setting the temperature at 250°C or more, the battery, if overheated, can be prevented from further generating heat due to the short circuit of the battery and the expansion of the short-circuit area. The falling-ball film-breakage temperature is more preferably 280°C or more, still more preferably 300°C or more, most preferably 350°C or more, from the viewpoint of affording heat resistance to a secondary battery.

The porous film preferably has a shutdown temperature of 135°C or less. In cases where a secondary battery has a shutdown temperature of 135°C or less and is formed to have higher capacity and higher output, the shutdown function of the battery can work sufficiently even when the exothermic onset temperature is decreased. Such a shutdown temperature is more preferably 130°C or less from the viewpoint of a further decrease in the exothermic onset temperature for a secondary battery having higher capacity and higher output.

A difference between the shutdown temperature and meltdown temperature (meltdown temperature - shutdown temperature) of the porous film is preferably 75°C or more. The above-mentioned temperature difference can be achieved either by making the shutdown temperature lower or making the meltdown temperature higher. In cases where the difference between the shutdown temperature and the meltdown temperature is 75°C or more, such a difference is large between a temperature at which the porous structure is shut down by melting due to heat arising from the heat generation, and a temperature at which the melting is completed subsequently, and the battery is short-circuited, making it possible to inhibit the heat generation. From the viewpoint of preventing the short-circuit, the difference between the shutdown temperature and the meltdown temperature is more preferably 100°C or more. The shutdown temperature refers to a temperature at which a lithium-ion battery, if overheated, generates heat, the melting due to which shuts down the porous structure, shuts down the ion migration, and thus shuts down the electricity generation. The meltdown temperature refers to a temperature at which heat, if generated to a temperature equal to or greater than the shutdown temperature, melts

the porous film down, and short-circuits the battery. In this regard, the shutdown temperature and meltdown temperature in the present invention can be evaluated by measuring the air permeability with the temperature being raised, and by measuring the changes in the air permeability, in accordance with the method described in the Examples.

The porous film preferably has an air permeability of 50 seconds/100 cc or more and 1,000 seconds/100 cc or less. The air permeability is more preferably 50 seconds/100 cc or more and 500 seconds/100 cc or less. The air permeability of 50 seconds/100 cc or more and 1,000 seconds/100 cc or less makes it possible to obtain sufficient ion migration, sufficient battery characteristics, and sufficient mechanical properties.

[Secondary Battery]

A porous film according to the present invention can be suitably used for a separator for a secondary battery such as a lithium-ion battery. A lithium-ion battery has a structure in which a secondary battery separator and an electrolyte are interposed between a cathode composed of a cathode active material laminated on a cathode current-collector and an anode composed of an anode active material laminated on an anode current-collector.

The cathode includes a current-collector and a cathode material laminated on the current-collector, wherein the cathode material is composed of an active material, binder resin, and conductive auxiliary. Examples of active materials include the following: lithium-containing transition metal oxides having a layered structure, such as $LiCoO_2$, $LiNiO_2$, and $Li(NiCoMn)O_2$; spinel type manganese oxides such as $LiMn_2O_4$; iron-based compounds such as $LiFePO_4$; and the like. The binder resin to be used needs only to be a resin having high oxidation resistance. Specific examples include fluorine resins, acryl resins, styrene/butadiene resins, and the like. The conductive auxiliary to be used is a carbon material such as carbon black or graphite. As the current-collector, metal foil is suitable, and aluminium in particular is often used.

The anode includes a current-collector and an anode material laminated on the current-collector, wherein the anode material is composed of an active material and a binder resin. Examples of active materials include the following: carbon materials such as artificial graphite, natural graphite, hard carbon, and soft carbon; lithium alloy materials with tin, silicon, or the like; metal materials such as Li; lithium titanate ($Li_4Ti_5O_{12}$); and the like. Examples of binder resins include fluorine resins, acryl resins, styrene/butadiene resins, and the like. As the current-collector, metal foil is suitable, and copper foil in particular is often used.

The electrolyte solution serves as a field where ions are allowed to migrate between the cathode and the anode in a secondary battery, and is constituted by an electrolyte dissolved in an organic solvent. Examples of electrolytes include LiPF6, $LiBF_4$, $LiClO_4$, and the like. LiPF6 is suitably used from the viewpoint of solubility in an organic solvent and ionic conductivity. Examples of organic solvents include diethyl carbonate, propylene carbonate, fluorodiethyl carbonate, dimethyl carbonate, diethyl carbonate, ethylmethyl carbonate, gammabutylolactone, sulfolane, and the like. These organic solvents may be used in mixture of two or more kinds thereof.

In a method of producing a secondary battery, an active material and a conductive auxiliary are first dispersed in a binder solution to prepare a coating liquid for an electrode. This coating liquid is applied onto a current-collector, and the solvent is dried to obtain a cathode or an anode. After the drying, the coating film preferably has a film thickness of 50 μm or more and 500 μm or less. A secondary battery separator is arranged between the resulting cathode and anode so as to be in contact with the respective active material layers of the electrodes. The resulting object is enclosed in a covering material such as an aluminium laminate film. An electrolyte solution is injected into the object. An anode lead and a safety valve are attached to the object, and the covering material is sealed. A secondary battery obtained in this manner has high thermal film-breakage resistance and excellent battery characteristics, and in addition, can be produced at low cost.

EXAMPLES

Below, the present invention will be specifically described with reference to Examples, and the present invention is not limited to these. The measurement methods used in the present Examples will be described below.

[Measurement Method]

(1) Melting Point of Heat-resistant Resin

Using a differential scanning calorimeter (DSC) in accordance with JIS K7121 (2012), a resin was heated first, cooled, and then heated for the second time to be measured for any endothermic peak and the temperature of the peak, if any.

(2) Strength of Porous Layer and Adhesive Strength at Interface between Porous Base Material and Porous Layer

A 180-degree peel test was performed in the longitudinal direction of a sample at a tension rate of 5.0 mm/second in accordance with the method 1 described in 10.3 Test Method in JIS Z0237 (2009) using RHEO METER CR-3000EX-S (manufactured by Sun Scientific Co., Ltd.). A sample having a size of 10 mm × 150 mm cut out of the porous film obtained in each of Examples was adhered to a test plate with a double-sided adhesive tape. To the surface of the sample, a cellophane tape (manufactured by Nichiban Co., Ltd.) having the same size was adhered using a roll press under conditions at 0.5 MPa and at 0.2 m/min. An end of the cellophane tape was held and folded 180° back so that the outer side of the tape could be inside. Thus, the cellophane tape was peeled off. The cellophane tape was peeled from the sample by 50% in length. If a polyolefin-made porous base material was found at at least one spot in the area of peeling, a judgement was made as follows: the adhesive strength between the polyolefin-made porous base material and the porous layer was lower than the strength of the porous layer; and peeling occurred at the interface between the polyolefin-made porous base material and the porous layer ("interface" in Table 1). This means that the strength of the porous layer was higher than the adhesive strength between the polyolefin-made porous base material and the porous layer. In cases where no polyolefin-made porous base material was found (in cases where the surface of the polyolefin-made porous base material of the sample peeled off was covered with the resin or particles constituting the porous layer), a judgement was made as follows: the adhesive strength between the polyolefin-made porous base material and the porous layer was higher than the strength of the porous layer; and cohesive failure occurred in the porous layer ("porous layer" in Table 1). This means that the strength of the porous layer was lower than the adhesive strength between the polyolefin-made porous base material and the porous layer. The strength of the porous layer was defined as a value obtained by averaging the measured values for the 50%-long portion peeled from the test plate when the cohesive failure occurs (however, excluding the measured values for the initial 25%-long portion after the start of measurement). Such a measurement was taken 5 times per sample. The unit was denoted by N/10 mm. In this regard, the portion peeled off is a portion having the lowest strength.

(3) Porosity of Porous Layer

With regard to the porosity of a porous layer, a porous film was frozen with liquid nitrogen, the upper portion of the film was irradiated with an argon beam to produce a cross-section (the Cryo-BIB method), and the cross-section underwent ioncoating with an ion coater to produce a measurement sample. The surface and cross-section of the resulting sample were observed at an imaging magnification ratio of 20,000× and an imaging magnification ratio of 40,000× respectively at an accelerating voltage of 1.5 kV to obtain image data (an image including only an observation area and not displaying a scale bar or the like) using a field emission scanning electron microscope (FE-SEM) S4800 manufactured by Hitachi High-Tech Corporation. The resulting image data was cut to leave an image having only the porous layer, and this image underwent image analysis using HALCON Ver.10.0 made by MVTec Software GmbH, to calculate the porosity of the porous layer. In the image analysis method, an 11-pixel average image A and a 3-pixel average image B were first generated for a 256-gradation monochrome image, and the area of the whole image B (Area_all) was calculated. Next, the image A as a difference was removed from the image B to generate an image C, and a region D satisfying "luminance ≥10" was extracted therefrom. The extracted region D was divided into blocks, and a region E satisfying "area ≥100" was extracted. A region F subjected to closing treatment with a circular element having a radius of 2.5 pixels was generated for the region E, and a region G subjected to opening treatment with a rectangular element of 1 (horizontal) × 5 (vertical) pixels was generated, so that the pixel portion satisfying "vertical size <5" was removed. The region G was divided into blocks, and a region H satisfying "area ≥500" was extracted therefrom, so that a fibril region was extracted. Further, a region I satisfying "image ≥5" was extracted from the image C, the region I was divided into blocks, and a region J satisfying "area ≥300" was extracted therefrom. The region J was subjected to opening treatment with a circular element having a radius of 1.5 pixels, and then subjected to closing treatment with a circular element with a radius of 8.5 pixels, thereby generating a region K. From the region K, a region L satisfying "area ≥200" was extracted. A region M which was obtained by filling dark areas having "area ≥4,000" pixels with bright areas was generated in the region L, thereby extracting a region of unopened parts other than fibrils. Finally, a total region N of the region H and the region M was generated, and an area of the total region N (Area_closed) was calculated, thereby determining the area of the unopened parts. The calculation was performed based on the following equation:

$$\text{Porosity (\%) of Porous Layer} = (\text{Area_all} - \text{Area_closed}) / \text{Area_all} \times 100$$

(4) Permeation Speed and Permeation Area of Diethyl Carbonate

A specimen having a size of 100 mm × 100 mm was cut out as a sample. The sample was adhered to a metal

frame (having an outer diameter of 100 mm × 100 mm and an inner diameter of 90 mm × 90 mm), and then, onto the sample, 100 μL of diethyl carbonate was dropped. The permeation speed of diethyl carbonate was calculated from the following: the time taken by diethyl carbonate to reach the back face of the sample; and the thickness of the sample.

In addition, an image was taken after diethyl carbonate was dropped and left to stand for 10 seconds. An image analysis software (SPIP, made by Toyo Corporation) was used for the below-mentioned analysis. On a HeightSensor image, the boundary between the diethyl carbonate and the film was highlighted using a general-purpose plugin (PrugIn_BoundaryDropper (Particle7x7)). A value was then calculated for the diethyl carbonate area not including the end of the image and included in the field-of-view by automatic calculation of the threshold, and the calculated value was regarded as the permeation area.

(5) Falling-ball Film-breakage Temperature

A specimen having a size of 50 mm × 50 mm was cut out as a sample. The cut sample was fixed to a metal frame in the middle of which a hole of a diameter of 12 mm was opened. A tungsten ball having a diameter of 10 mm was placed above the hole having a diameter of 12 mm, and they were placed in a hot air oven. The temperature was raised at 5°C/min, and the temperature at which the tungsten ball fell was measured. The measurement was performed five times per sample, and the average temperature value was regarded as the falling-ball film-breakage temperature.

(6) Film Thickness of Porous Layer

A cross-section of the sample was cut out using a microtome, and then was observed on a field emission scanning electron microscope. In the observation region, the highest point of the part sinking in the porous layer deepest was selected, and a distance from the bottom face (the porous base material side) of the porous layer to the highest point on the front face was measured as the film thickness of the porous layer. Optional five spots in a sample having a size of 100 mm × 100 mm were each observed, selected, measured, and averaged, and the resulting value was regarded as the film thickness of the porous layer.

(7) Shutdown Temperature and Meltdown Temperature

The shutdown temperature and meltdown temperature were measured by a method disclosed in WO2007/052663A1. According to this method, the porous film was exposed to an atmosphere at a temperature of 30°C, and the temperature was raised at 5°C/min, during which the air permeability of the film was measured. The temperature at which the air permeability (Oken) of the porous film exceeded 100,000 seconds/100 $cm^3$ for the first time was defined as the shutdown temperature of the porous film. In addition, regarding the meltdown temperature, the temperature at which the air permeability lowered to 10 seconds/100 $cm^3$ or less for the first time after the air permeability was brought to 100,000 seconds/100 $cm^3$ or more was defined as the meltdown temperature of the porous film. The upper limit of measurement of the meltdown temperature is 250°C. The air permeability resistance of the porous film was measured in accordance with JIS P 8117 (2009) using an Oken air permeability resistance meter (EGO-1T manufactured by Asahi Seiko Co., Ltd.).

(8) Air Permeability

The air permeability was measured in accordance with JIS P 8117 (1998) using an Oken air permeability resistance meter (EGO-1T manufactured by Asahi Seiko Co., Ltd.).

(9) Production of Battery

An aluminium foil was coated with a cathode slurry which was obtained by dispersing 92 parts by mass of $Li(Ni_{5/10}Mn_{2/10}Co_{3/10})O_2$ as a cathode active material, 2.5 parts by mass each of acetylene black and graphite as cathode conductive auxiliaries, and 3 parts by mass of polyvinylidene fluoride as a cathode binder into N-methyl-2-pyrrolidone using a planetary mixer, and the resulting object was dried and rolled to produce a cathode sheet (having a coating areal weight of 9.5 $mg/cm^2$). This cathode sheet was cut out to be 40 mm × 40 mm. At this time, a current-collecting tab-attached portion having no active material layer was cut out to have a size of 5 mm × 5 mm outside the active material surface. An aluminium tab having a width of 5 mm and a thickness of 0.1 mm was ultrasonically welded to the tab-attached portion. A copper foil was coated with an anode slurry which was obtained by dispersing 98 parts by mass of natural graphite as an anode active material, 1 part by mass of carboxymethylcellulose as a thickener, 1 part by mass of styrene/butadiene copolymer as an anode binder into water using a planetary mixer, and the resulting object was dried and rolled to produce an anode sheet (having a coating areal weight of 5.5 $mg/cm^2$). This anode sheet was cut

out to be 45 mm × 45 mm. At this time, a current-collecting tab-attached portion having no active material layer was cut out to have a size of 5 mm × 5 mm outside the active material surface. A copper tab having the same size as the cathode tab was ultrasonically welded to the tab-attached portion. Next, the porous film was cut out to be 55 mm × 55 mm, the cathode and the anode were stacked on both the surfaces of the porous film so that the porous film could be interposed between the active material layers, and all the cathode coating portion was disposed to face the anode coating portion to obtain a group of electrodes. The cathode, anode, and porous film were sandwiched between parts of one sheet of aluminium laminated film of 90 mm × 200 mm, the long sides of the aluminium laminated film were folded, and the two long sides of the aluminium laminated film were heat-sealed to form a bag. An electrolyte solution used was prepared by dissolving LiPF6 as a solute in a solvent mixture containing diethyl carbonate and diethyl carbonate at a ratio of 1:1 (volume ratio) to reach a concentration of 1 mol/liter. Into the bag-shaped aluminium laminated film, 1.5 g of electrolyte solution was injected, and the short side portions of the aluminium laminated film were heat-sealed while impregnation was occurring under reduced pressure. Thus, a laminate type battery was formed.

(10) Discharge Rate Characteristics

The laminate type battery produced was tested for discharge rate characteristics according to the following procedure, and evaluated on the basis on a discharge capacity retention ratio. A constant-current charge was performed under charge conditions at 0.5 C and 4.25 V, and a constant-current discharge was performed under discharge conditions at 0.5 C and 7 C and at 2.7 V.

<Calculation of Discharge Capacity Retention Ratio>

The discharge capacity retention ratio was calculated as follows: (discharge capacity at 7 C) / (discharge capacity at 0.5 C) × 100. Five such laminated type batteries as above-mentioned were produced, and an average value thereof was regarded as the discharge capacity retention ratio. The results were rated as follows: ◦, 80% or more; Δ, 75% or more and less than 80%; and ×, less than 75%.

(11) Cycle Characteristics

The laminate type battery produced was tested for cycle characteristics according to the following procedure, and the discharge rate characteristics were evaluated on the basis of a discharge capacity retention ratio after 500 cycles. A constant-current charge was performed under charge conditions at 2 C and 4.25 V, and a constant-current discharge was performed under discharge conditions at 2 C and 2.7 V.

<Calculation of Discharge Capacity Retention Ratio>

The discharge capacity retention ratio was calculated as follows: (discharge capacity after 500 cycles) / (discharge capacity after 1 cycle) × 100. Five such laminated type batteries as above-mentioned were produced, and an average value thereof was regarded as the discharge capacity retention ratio. The results were rated as follows: Good (o), 80% or more; ordinary (Δ), 75% or more and less than 80%; and Poor (×), less than 75%.

(12) Hotbox Test

The laminate type battery produced underwent a hotbox test according to the following procedure, and was evaluated on the basis of a discharge capacity retention ratio. A battery that underwent constant-current charge under charge conditions at 0.5 C and 4.25 V was heated to 150°C at 5°C/min, and checked for smoking and/or ignition. Five laminate type batteries were produced as above-mentioned, and rated as ◦ for no smoking and/or ignition found or as × for smoking and/or ignition found.

(Example 1)

In N-methyl-2-pyrrolidone dehydrated, 85 mol% of 2-chloro-1,4-phenylene diamine and 15 mol% of 4,4'-diaminodiphenylether with respect to the whole diamine were dissolved. To the resulting mixture, 99 mol% of 2-chloroterephthaloyl chloride with respect to the whole diamine was added as an acid dichloride, and the resulting mixture was stirred to be polymerized into an aromatic polyamide resin. The resulting polymerization solution was neutralized with 97 mol% of lithium carbonate with respect to the whole acid dichloride, and further neutralized with 15 mol% of diethanolamine and 25 mol% of triethanolamine to obtain an aromatic polyamide resin solution having an aromatic polyamide resin concentration of 10 mass%. The resulting aromatic polyamide resin can be said to be a heat-resistant resin having no

such peak top as above-mentioned and no melting point in the measurement temperature range of from -20 to 230°C. In addition, the resulting aromatic polyamide had an inherent viscosity ηinh of 4.5 dl/g. To the resulting aromatic polyamide resin solution, N-methyl-2-pyrrolidone was added, and the resin solution was primarily dispersed using a stirrer. In addition, N-methyl-2-pyrrolidone was added to alumina particles A (having an average particle diameter of 0.4 μm) and alumina particles B (having an average particle diameter of 0.05 μm), and the particles were primarily dispersed using a stirrer. Both the primarily dispersed dispersion liquids were mixed together so that the amount of the aromatic polyamide resin could be 10 parts by mass, the amount of the alumina particles A could be 85 parts by mass, and the amount of the alumina particles B could be 5 parts by mass, with respect to 100 parts by mass of the total of the aromatic polyamide resin and the alumina particles. To the resulting mixture, N-methyl-2-pyrrolidone was additionally added so that the solid content could be 20 mass%. The solution mixture further underwent primary dispersion using a stirrer. The primary dispersion liquid produced underwent dispersion using a bead mill. The beads used were of zirconia toughened alumina having a diameter of 0.5 mm. The liquid underwent one round of dispersion at a peripheral speed of 5 m/s, one round of dispersion at a peripheral speed of 7 m/s, and two rounds of dispersion at a peripheral speed of 10 m/s to yield a secondary dispersion liquid. The resulting secondary dispersion liquid had a viscosity of 1200 mPa- s. The resulting secondary dispersion liquid was applied, by dip coating, to both faces of a polyethylene porous base material (having a thickness of 5 μm, an air permeability of 120 seconds/100 cc, and the largest surface height difference of 160 nm) that underwent corona treatment under an air atmosphere. Then, the resulting object was immersed in a water bath, and dried until the solvent content was volatilized, to form a porous layer. Thus, a porous film according to the present invention was obtained. The measurement results of the characteristics of the resulting porous film are listed in Table 1.

(Example 2)

In N-methyl-2-pyrrolidone dehydrated, 90 mol% of 2-chloro-1,4-phenylene diamine and 10 mol% of 4,4'-diaminodiphenylether with respect to the whole diamine were dissolved. The resulting aromatic polyamide can be said to be a heat-resistant resin having no such peak top as above-mentioned and no melting point in the measurement temperature range of from -20 to 230°C. In addition, the inherent viscosity ηinh was 4.7 dl/g. A porous film according to the present invention was obtained in the same manner as in Example 1.

(Example 3)

In N-methyl-2-pyrrolidone dehydrated, 95 mol% of 2-chloro-1,4-phenylene diamine and 5 mol% of 4,4'-diaminodiphenylether with respect to the whole diamine were dissolved. The resulting aromatic polyamide can be said to be a heat-resistant resin having no such peak top as above-mentioned and no melting point in the measurement temperature range of from -20 to 230°C. In addition, the inherent viscosity ηinh was 4.9 dl/g. A porous film according to the present invention was obtained in the same manner as in Example 1.

(Example 4)

A porous film according to the present invention was obtained in the same manner as in Example 1 except that the largest surface height difference of the polyethylene porous base material was 200 nm.

(Example 5)

A porous film according to the present invention was obtained in the same manner as in Example 3 except that the secondary dispersion liquid obtained in Example 3 was applied, by dip coating, to both faces of a polyethylene porous base material (having a thickness of 5 μm and an air permeability of 120 seconds/100 cc) which underwent corona treatment under an air atmosphere, and that the resulting object was passed through an air gap at a temperature of 60°C and a humidity of 70 RH%.

(Example 6)

A porous film according to the present invention was obtained in the same manner as in Example 3 except that the secondary dispersion liquid obtained in Example 3 was applied, by dip coating, to both faces of a polyethylene porous base material (having a thickness of 5 μm and an air permeability of 120 seconds/100 cc) which underwent corona treatment under an air atmosphere, and that the resulting object was passed through an air gap at a temperature of 65°C and a humidity of 75

RH%.

(Comparative Example 1)

In N-methyl-2-pyrrolidone dehydrated, 75 mol% of 2-chloro-1,4-phenylene diamine and 25 mol% of 4,4'-diaminodiphenylether with respect to the whole diamine were dissolved. The resulting aromatic polyamide can be said to be a heat-resistant resin having no such peak top as above-mentioned and no melting point in the measurement temperature range of from -20 to 230°C. The inherent viscosity ηinh was 2.5 dl/g. A porous film was obtained in the same manner as in Example 1 except that the amount of the aromatic polyamide resin was 10 parts by mass, and the amount of the alumina particles A was 90 parts by mass, with respect to 100 parts by mass of the total of the aromatic polyamide resin and the alumina particles A, and that the polyethylene porous base material having the largest surface height difference of 130 nm did not undergo corona treatment.

(Comparative Example 2)

In N-methyl-2-pyrrolidone dehydrated, 75 mol% of 2-chloro-1,4-phenylene diamine and 25 mol% of 4,4'-diaminodiphenylether with respect to the whole diamine were dissolved. The resulting aromatic polyamide can be said to be a heat-resistant resin having no such peak top as above-mentioned and no melting point in the measurement temperature range of from -20 to 230°C. The inherent viscosity ηinh was 2.2 dl/g. A porous film was obtained in the same manner as in Example 1 except that the amount of the aromatic polyamide resin was 30 parts by mass, and the amount of the alumina particles A was 70 parts by mass, with respect to 100 parts by mass of the total of the aromatic polyamide resin and the alumina particles A, and that the polyethylene porous base material having the largest surface height difference of 130 nm did not undergo corona treatment.

[Table 1]

| | Portion Peeled off | Strength (N/10 mm) | Porosity of Porous Layer (%) | Permeation Speed (μm/min) | Permeation Area ($mm^2$) | Thickness of Porous Layer (μm) | Air Permeability (second) | Falling-ball Film-Breakage Temperature (°C) | Shutdown Temperature (°C) | Meltdown Temperature (°C) | Discharge Rate Characteristics | Cycle Characteristics | Hotbox Test |
|---|---|---|---|---|---|---|---|---|---|---|---|---|---|
| Example 1 | Porous Layer | 0.45 | 52 | 4 | 500 | 4 | 250 | 360 | 138 | 250 or more | Δ | Δ | ◦ |
| Example 2 | Porous Layer | 0.55 | 65 | 5 | 580 | 4 | 240 | 380 | 139 | 250 or more | ◦ | Δ | ◦ |
| Example 3 | Porous Layer | 0.65 | 60 | 4.5 | 550 | 4 | 230 | 400 | 140 | 250 or more | ◦ | Δ | ◦ |
| Example 4 | Porous Layer | 0.5 | 55 | 4.2 | 520 | 4 | 210 | 370 | 137 | 250 or more | Δ | Δ | ◦ |
| Example 5 | Porous Layer | 0.6 | 62 | 5.5 | 600 | 4 | 200 | 380 | 139 | 250 or more | ◦ | ◦ | ◦ |
| Example 6 | Porous Layer | 0.65 | 64 | 7 | 700 | 4 | 180 | 350 | 138 | 250 or more | ◦ | ◦ | ◦ |
| Comparative Example 1 | Interface | 0.35 | 55 | 3.5 | 450 | 4 | 280 | 250 | 140 | 250 or more | Δ | × | × |
| Comparative Example 2 | Interface | 0.6 | 35 | 2 | 300 | 4 | 550 | 350 | 140 | 250 or more | × | × | ◦ |

From Table 1, it is understood that, in each of Examples, the characteristics of the porous layer were expressed sufficiently, and good battery characteristics were obtained.

On the other hand, Comparative Examples have revealed that the strength of the porous layer was low, or that the adhesive strength at the interface between the porous layer and the porous base material was lower, with the result that the characteristics of the porous layer were not expressed, or that the battery characteristics were insufficient.

## Claims

**1.** A porous film comprising:

a polyolefin-made porous base material, and
a porous layer laminated on at least one face of said polyolefin-made porous base material and containing a heat-resistant resin having a melting point of 200°C or more or having no melting point,
wherein said porous layer has a porosity of 50% or more and 80% or less and a strength of 0.4 N/10 mm or more, and
wherein the strength of said porous layer is lower than the adhesive strength between said polyolefin-made porous base material and said porous layer in the longitudinal direction in a 180-degree peel test.

**2.** The porous film according to claim 1, wherein the permeation speed of diethyl carbonate through said porous film is 4 μm/min or more, and the permeation area of said diethyl carbonate is 500 $mm^2$ or more after the permeation allowed for 10 seconds,

wherein said permeation speed is calculated from the following: a period of time from the time when 100 μL of diethyl carbonate is dropped onto the front face of said porous film to the time when said diethyl carbonate reaches the back face; and the thickness of said porous film, and
wherein said permeation area of said diethyl carbonate is calculated, using an image analysis software, from an image taken after said 100 μL of said diethyl carbonate is dropped and left to stand for 10 seconds.

**3.** The porous film according to claim 1 or 2, wherein said porous layer comprises inorganic particles.

**4.** The porous film according to any one of claims 1 to 3, wherein the falling-ball film-breakage temperature of said porous film is 250°C or more.

**5.** The porous film according to any one of claims 1 to 4, wherein a difference between the shutdown temperature and meltdown temperature of said porous film is 70°C or more.

**6.** A secondary battery separator, comprising said porous film according to any one of claims 1 to 5.

**7.** A secondary battery comprising said secondary battery separator according to claim 6.

## INTERNATIONAL SEARCH REPORT

International application No.
PCT/JP2020/011079

A. CLASSIFICATION OF SUBJECT MATTER
Int.Cl. B32B5/22(2006.01)i, B32B27/32(2006.01)i, H01M2/16(2006.01)i
FI: B32B5/22, H01M2/16L, H01M2/16P, H01M2/16M, B32B27/32Z
According to International Patent Classification (IPC) or to both national classification and IPC

B. FIELDS SEARCHED
Minimum documentation searched (classification system followed by classification symbols)
Int.Cl. B32B5/22, B32B27/32, H01M2/16

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2017-039250 A (FUJIFILM CORPORATION) 23.02.2017 (2017-02-23), entire text | 1-7 |
| A | JP 2010-113804 A (SUMITOMO CHEMICAL CO., LTD.) 20.05.2010 (2010-05-20), entire text | 1-7 |
| A | WO 2017/170288 A1 (TORAY INDUSTRIES, INC.) 05.10.2017 (2017-10-05), paragraph [0125], example 4 | 1-7 |
| A | JP 2010-067450 A (TOYOTA MOTOR CORPORATION) 25.03.2010 (2010-03-25), paragraph [0047] | 1-7 |
| A | WO 2017/130574 A1 (DAICEL CORPORATION) 03.08.2017 (2017-08-03), examples | 1-7 |
| A | JP 2009-249477 A (ASAHI KASEI E MATERIALS CORPORATION) 29.10.2009 (2009-10-29), paragraph [0022] | 1-7 |
| A | JP 2008-106237 A (ASAHI KASEI CHEMICALS CORPORATION) 08.05.2008 (2008-05-08), paragraph [0021] | 1-7 |

☒ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 27.05.2020 | 09.06.2020 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2020/011079

C (Continuation). DOCUMENTS CONSIDERED TO BE RELEVANT

| Category* | Citation of document, with indication, where appropriate, of the relevant passages | Relevant to claim No. |
|---|---|---|
| A | WO 2015/182689 A1 (TORAY BATTERY SEPARATOR FILM CO., LTD.) 03.12.2015 (2015-12-03), examples | 1-7 |

Form PCT/ISA/210 (second sheet) (January 2015)

**INTERNATIONAL SEARCH REPORT**
Information on patent family members

International application No.
PCT/JP2020/011079

| | | | |
|---|---|---|---|
| JP 2017-039250 A | 23.02.2017 | (Family: none) | |
| JP 2010-113804 A | 20.05.2010 | (Family: none) | |
| WO 2017/170288 A1 | 05.10.2017 | (Family: none) | |
| JP 2010-067450 A | 25.03.2010 | (Family: none) | |
| WO 2017/130574 A1 | 03.08.2017 | US 2019/0036094 A1<br>examples | |
| JP 2009-249477 A | 29.10.2009 | (Family: none) | |
| JP 2008-106237 A | 08.05.2008 | (Family: none) | |
| WO 2015/182689 A1 | 03.12.2015 | US 2017/0149038 A1<br>examples<br>EP 3085531 A1 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2010123465 A
- JP 2016130027 A
- JP 2002216734 A
- JP 2009231281 A
- WO 2007052663 A1